# EUROPEAN PATENT APPLICATION

(11) **EP 1 816 150 A1**
(43) Date of publication of application: **08.08.2007**
(21) Application number: 06290187.1
(22) Date of filing: 01.02.2006
(51) Int. Cl.: C08G 18/12, C08G 18/30, C09J 175/04, C08G 18/48

(54) **Reactive polyurethane hot melt sealants**

(71) Applicant: LE JOINT FRANCAIS, 75008 Paris (FR)
(72) Inventor: Piestert, Gerhard, 68723 Schwetzingen (DE); Schub, Christian, 65232 Taunusstein (DE)
(74) Representative: Corizzi, Valérie

(57) **Abstract**

Moisture curing polyurethane hot melt sealant with high cohesive strength in uncured state at RT forming a low modulus elastomer for sealing chamber and transparent cover screen of automotive lamps.

## Description

The present invention relates to moisture curing, polyurethane hot-melt sealant compositions, to a method for their preparation and to their use as sealants in the automotive industry, especially for sealing chamber and transparent cover screen of an automotive lamp.

Use of one and two component silicone compositions or two component polyurethane adhesives for bonding and sealing chamber (made of ABS, PP and PBT, respectively) and cover screen (made of PC or glass) is generally known. However, these sealants and adhesives do not allow a tightness test immediately after application and assembly of lamp parts, which results in considerable delays in production. In addition, non-reactive butyl compositions are used. These butyl compositions, as well as the silicone compositions, prevent recycling of the sealed lamp substrates after dismantling the lamp.

The problems that the present invention solves are the following:

The hot-melt sealants of the invention are easily applicable, after cooling down to room temperature they build up quickly the high cohesive strength which is necessary for an immediate tightness test, they cure by reaction with air moisture, provide fast bubble-free curing, forming a low modulus elastomer with high elongation at break, which allows recycling of the chamber and screen of the dismantled lamp because the sealant can be removed completely by peeling.

Document EP-0 369 607 discloses moisture-curing, polyurethane hot-melt adhesive compositions with NCO/OH ratio of 1,1 to 2,2, based on a mixture of two polyols of molecular weight under 1 000 and above 1 000. However, the NCO content of the compositions is above 450 mVal/kg. Such compositions are used as adhesives and could not be used satisfactorily as sealants, notably because they would produce bubbles while curing.

Document WO 03/051951 discloses isocyanate-terminated polyurethane prepolymers which cure with air-moisture and their use as sealants and adhesives.

However, the polymers disclosed in this document are in the liquid state, which is not convenient for their application as sealants and they have a high NCO content which tends to produce bubbles when curing. Specific additives have to be added to the polymers disclosed in WO 03/0511951 to produce hot-melt compositions.

On the contrary, the prepolymers of the invention are hot-melt prepolymers, solid at room temperature, they cure without forming bubbles, have rapidly sufficient tightness to allow a tightness test to be performed shortly after application. They also allow complete recycling of the lamp chamber and screen thanks to the low modulus and high elongation at break properties of the resulting elastomer.

The polyurethane prepolymer of the invention has the following characteristics:

It consists in the reaction product of
(i) at least one polyisocyanate;
   with
(ii) at least one polyol of molecular weight comprised between 170 and 2140, and OH value comprised between 1400 and 12000m Val(OH)/kg;
   wherein:
   - the NCO/OH ratio in the prepolymer is comprised between 1,1 and 1,4,
   - the free NCO-content in the prepolymer is inferior or equal to 450mVal(NCO)/kg
   - the urethane content in the prepolymer is superior or equal to 1250mVal(urethane)/kg,
      and the prepolymer is a solid at room temperature.

According to a variant of the invention, the polyol which is used to prepare the polyurethane prepolymer can be selected among mixtures of polyols of varied weight provided that the average (ponderated) molecular weight of the mixture is within the above-mentioned limits. Consequently, another object of the invention is a polyurethane prepolymer consisting in the reaction product of:
(i) at least one polyisocyanate;
   with
(ii) at least two polyols of molecular weight comprised between 62 and 6000, the average molecular weight of the polyol mixture being comprised between 170 and 2140, the polyols having an OH value comprised between 1400 and 12000mVal(OH)/kg;
   wherein:
   - the NCO/OH ratio in the prepolymer is comprised between 1,1 and 1,4,
   - the free NCO-content in the prepolymer is inferior or equal to 450mVal(NCO)/kg
   - the urethane content in the prepolymer is superior or equal to 1250mVal(urethane)/kg,
      and the prepolymer is a solid at room temperature.

Preferably, the polyol or polyol mixture (average) molecular weight is comprised between 750 and 1050.

mVal is the same as mMol but is a more usual unit for polymers.

Isocyanates which can be used in the present invention are preferably selected from aliphatic or aromatic polyisocyanates, like for example: 1,5-naphthylene diisocyanate, 2,4- or 4,4'-diphenylmethane diisocyanate (MDI), hydrogenated MDI (H₁₂MDI), xylylene diisocyanate (XDI), tetramethyl xylylene diisocyanate (TMXDI), 4,4'-diphenyl dimethyl-methane diisocyanate, di- and tetraalkylene diphenylmethane diisocyanate, 4,4'-dibenzyl diisocyanate, 1,3-phenylene diisocyanate, 1,4-phenylene diisocyanate, the isomers of toluene diisocyanate (TDI), 1-methyl-2,4-diisocyanatocyclohexane, 1,6-diiso-cyanato-2,2,4-trimethyl hexane, 1,6-diisocyanato-2,4,4-trimethyl hexane, 1-isocyanatomethyl-3-isocyanato-1,5,5-trimethyl cyclohexane (IPDI), chlorinated and brominated diisocyanates phosphorus-containing diisocyanates, 4,4'-diisocyanatophenyl perfluoroethane, tetramethoxybutane-1,4-diisocyanate, butane-1,4-diisocyanate, hexane-1,6-diisocyanate (HDI), dicyclohexylmethane diisocyanate, cyclo-hexane-1,4-diisocyanate, ethylene diisocyanate, phthalic acid-bis-isocyanatoethyl ester; diisocyanates containing reactive halogen atoms, such as 1-chloromethylphenyl-2,4-diisocyanate, 1-bromomethylphenyl-2,6-diisocyanate or 3,3-bis-chloromethylether 4,4'-dip-henyl diisocyanate.

Preferably, symmetric polyisocyanates are used. Favourite polyisocyanates are selected from: 4,4'-diphenylmethane diisocyanate, 2,4-toluene diisocyanate, hexamethylene diisocyanate, isophorone diisocyanate, 4,4,4 triisocyanato-triphenylmethane.

As polyol or polyol mixtures, polyether polyols and polyester polyols can be mentioned. The term "polyol" encompasses a single polyol or a mixture of two or more polyols which may be used for the production of polyurethanes. A polyol is understood to be a polyhydric alcohol, i.e. a compound containing more than one OH group in the molecule.

Suitable polyols are, for example, aliphatic alcohols containing 2 to 4 OH groups per molecule. The OH groups may be both primary and secondary. Suitable aliphatic alcohols include, for example, ethylene glycol, propylene glycol, butane-1,4-diol, pentane-1,5-diol, hexane-1,6-diol, heptane-1,7-diol, octane-1,8-diol and higher homologs or isomers thereof.

Also suitable are higher alcohols such as, for example, glycerol, trimethylol propane, pentaerythritol and oligomeric ethers of such molecules.

Other suitable polyol components are the reaction products of low molecular weight polyhydric alcohols with alkylene oxides, so-called polyethers. The alkylene oxides preferably contain 2 to 4 carbons atoms. Suitable reaction products of the type in question are, for example, the reaction products of ethylene glycol, propylene glycol, the isomeric butane diols, hexane diols or 4,4'-dihydroxydiphenyl propane with ethylene oxide, propylene oxide or butylene oxide or mixtures of two or more thereof. The reaction products of polyhydric alcohols, such as glycerol, trimethylol ethane or trimethylol propane, pentaerythritol or sugar alcohols or mixtures of two or more thereof, with the alkylene oxides mentioned to form polyether polyols are also suitable.

Other suitable polyol components for the production of the isocyanate-terminated polyurethane prepolymer are polyester polyols. For example, it is possible to use polyester polyols obtained by reacting low molecular weight alcohols, more particularly ethylene glycol, diethylene glycol, neopentyl glycol, hexanediol, butanediol, propylene glycol, glycerol or trimethylol propane, with caprolactone. Other suitable polyhydric alcohols for the production of polyester polyols are 1,4-hydroxymethyl cyclohexane, 2-methyl propane-1,3-diol, butane-1,2,4-triol, triethylene glycol, tetraethylene glycol, polyethylene glycol, dipropylene glycol, polypropylene glycol, dibutylene glycol and polybutylene glycol.

Other suitable polyester polyols can be obtained by polycondensation. Thus, dihydric and/or trihydric alcohols may be condensed with less than the equivalent quantity of dicarboxylic acids and/or tricarboxylic acids or reactive derivatives thereof to form polyester polyols. Suitable dicarboxylic acids are, for example, adipic acid or succinic acid and higher homologs thereof containing up to 16 carbon atoms, unsaturated dicarboxylic acids, such as maleic acid or fumaric acid, and aromatic dicarboxylic acids, more particularly the isomeric phthalic acids, such as phthalic acid, isophthalic acid or terephthalic acid. Citric acid and trimellitic acid, for example, are also suitable tricarboxylic acids. The acids mentioned may be used individually or as-mixtures of two or more thereof.

Favourite polyols are polyether polyol like polypropylene ether diol or triol, polyethylene ether diol or triol, polybutylene ether diol or triol, which are available as commercial products with different molecular weights, and polyester polyol, hydrogenated bisphenol A, dimeric acid based polyester polyols.

Preferably, the polyols are diols, but up to 25 % by weight of the polyol mixture can be selected among polyols with 3 or more alcohol functions.

Another object of the invention is a method for the preparation of a polyurethane prepolymer as above disclosed. This method comprises the steps of reacting:
(i) at least one polyisocyanate;
   with
(ii) at least one polyol of molecular weight comprised between 170 and 2140, or
(ii bis) at least two polyols of molecular weight comprised between 62 and 6000, the average molecular weight of the polyol mixture being comprised between 170 and 2140,
   the polyol(s) having an OH value comprised between 1400 and 12000mVal(OH)/kg;
      wherein the quantity of polyisocyanate is selected so that:
   - the NCO/OH ratio in the prepolymer is comprised between 1,1 and 1,4
   - the free NCO-content in the prepolymer is inferior or equal to 450mVal(NCO)/kg
   - the urethane content in the prepolymer is superior or equal to 1250mVal(urethane)/kg.

The man skilled in the art will calculate the quantities of polyol(s) and polyisocyanate(s) according to the relative molecular weight and number of functionality of those molecules so that the appropriate NCO/OH ratio and number of NCO functions and urethane functions in the prepolymer are obtained.

The examples illustrate the preparation of such prepolymers.

The reaction is performed by introduction of the reactants in the reactor and stirring. Preferably, the polyol mixture is introduced first into the reactor, heated to a temperature of 50 to 60°C before the polyisocyanate is added.

A stabilizer is introduced into the reactor, such as an acid, a s-dicarboxylic compound, p-toluene sulfonylisocyanate, its hydrolyzed product p-toluene sulphonamide. One can also use stabilizers which stabilize the viscosity of the polyurethane according to the invention during production, storage and application. Stabilizers suitable for this purpose are, for example, monofunctional carboxylic acid chlorides, monofunctional highly reactive isocyanates and also non-corrosive inorganic acids, or example benzoyl chloride, toluenesulfonyl isocyanate, phosphoric acid or phosphorus acid. Other suitable stabilizers in the context of the invention are antioxidants, UV stabilizers and hydrolysis stabilizers. The choice of these stabilizers is determined on the one hand by the principal components of the polyurethane according to the invention and, on the other hand, by the application conditions and the stressing which the cured product can be expected to undergo.

The polyisocyanate (s) is (are) introduced into the reactor while stirring and the mixture is heated up to 80-110°C for several hours, preferably under vacuum. The prepolymer is then left to cool down to room temperature. When cooling down to room temperature, an interaction between the urethane groups is formed by hydrogen bridges resulting in high cohesive strength in the still uncured sealant. Final strength of this elastomeric sealant is developed by a chemical curing process at room temperature. By reaction with moisture, urea bridges are built up, forming a crosslinked unmeltable network.

Modulus of the prepolymer of the invention is higher than 10⁴ Pa, when measured with a Bohlin rheometer (10 Hz; gap 1000).

Once it has cooled down to room temperature, the prepolymer of the invention is a solid.

Another object of the invention is a hot melt sealant composition comprising a polyurethane prepolymer according to the invention. Such a composition can comprise, apart from stabilizers which have already been disclosed, ingredients like thixotropic agents, fillers, pigments, resins, plasticizers like phtalates or alkylsulfonic acid ester. Among thixotropic agents can be mentioned: pyrogenic silica and carbon black.... Such ingredients are introduced into the reactor once the prepolymer has been prepared, while stirring and heating.

The mixture, heated at a temperature of at least 75°C, preferably about 100°C, is applied as a sealant at the junction of two elements to be sealed, like a lamp chamber and cover, but also cover to boxes, casing, housing etc.

The sealant can be applied as a thin film or as a piece of a certain width. A compared to polyurethane prepolymers with a NCO value superior to 450mVal/kg, the prepolymers of the invention can form pieces of any shape and width and cure without forming bubbles.

Directly after application, as soon as it has cooled down to room temperature, the sealant can be tested for tightness.

Preferably, the NCO content in the prepolymer is inferior or equal to 350 mVal/kg, so that the prepolymer can cure when exposed to air moisture.

Preferably, the urethane content in the prepolymer is superior or equal to 1500 m Val/kg. Preferably the urethane content in the prepolymer is inferior or equal to 2250 mVal/kg.

A cured sealant composition having the shape of a film of 2 mm has an elongation at break superior or equal to 250 %.

Preferably, the cured sealant is a film of a width of 2 mm or more.

The sealant of the invention is used at the junction of at least two materials selected from: a metal, like for example, steel, aluminium also with coating, a glass, a plastic, like for example, polypropylene, polyvinylchloride, ABS, polycarbonate etc...

When a glass surface is used, a glass-activator or glass primer is applied before application of the sealant. Such primers are well known to the man skilled in the art and are selected for example among: silane monomers like amino propyltrimethoxysilane as activator or primer like for example the product Totalseal 5028 ® (commercialized by Hutchinson).

When a plastic surface is used, an appropriate pretreatment is applied in a known manner, like plasma, or oxidizing flame pretreatment.

Another object of the present invention is an automotive lamp kit comprising a lamp screen, a lamp cover, and a hot-melt sealant composition as above disclosed.

### Examples:

Version 1:
900 g (1996 m Val OH/kg) polypropylene ether diol
100 g (6863 mVal OH/kg) polypropylene ether diol and
1 g toluene sulfonylisocyanate are placed in a reactor. At 50°C, 388 g diphenylmethane diisocyanate (MDI) are added under stirring. The mixture is heated up to 90-100°C and this temperature is kept for 3 hours under vacuum.

The prepolymer has an NCO content of 422 mVal/kg and a urethane content of 1790 mVal/kg. Modulus of the prepolymer at room temperature is higher than 10⁴ Pa. Elongation at break of a cured 2 mm film is higher than 250 %.

Version 2:
350 g (990 mVal OH/kg) polypropylene ether diol
300 g (4635 mVal OH/kg) polypropylene ether diol
50 g (6863 mVal OH/kg) polypropylene ether triol and
1 g toluene sulfonylisocyanate are placed in a reactor. At 50°C, 312 g diphenylmethane diisocyanate (MDI) are added under stirring. The mixture is heated up to 90-100°C and this temperature is kept for 3 hours under vacuum.

The prepolymer has an NCO content of 411 mVal/kg and a urethane content of 2055 mVal/kg. Modulus of the prepolymer at room temperature is higher than 10⁴ Pa. Elongation at break of a cured 2 mm film is higher than 250 %.

## Claims

1. A polyurethane prepolymer consisting in the reaction product of:
(i) at least one polyisocyanate;
with
(ii) at least one polyol of molecular weight comprised between 170 and 2140, and OH value comprised between 1400 and 12000m Val(OH)/kg;
wherein:
- the NCO/OH ratio in the prepolymer is comprised between 1,1 and 1,4,
- the free NCO-content in the prepolymer is inferior or equal to 450m Val(NCO)/kg
- the urethane content in the prepolymer is superior or equal to 1250mVal(urethane)/kg,
and the prepolymer is a solid at room temperature.

2. A polyurethane prepolymer consisting in the reaction product of:
(i) at least one polyisocyanate;
with
(ii) at least two polyols of molecular weight comprised between 62 and 6000, the average molecular weight of the polyol mixture being comprised between 170 and 2140, the polyols having an OH value comprised between 1400 and 12000mVal(OH)/kg;
wherein:
- the NCO/OH ratio in the prepolymer is comprised between 1,1 and 1,4,
- the free NCO-content in the prepolymer is inferior or equal to 450mVal(NCO)/kg
- the urethane content in the prepolymer is superior or equal to 1250mVal(urethane)/kg,
and the prepolymer is a solid at room temperature.

3. The polyurethane prepolymer according to claim 1 or claim 2, wherein the modulus of said prepolymer is superior or equal to 1000Pa, measured with a Bolin rheometer.

4. The polyurethane prepolymer according to anyone of the preceding claim, wherein the polyisocyanate is selected from: 4,4'-diphenylmethane diisocyanate, 2,4-toluene diisocyanate, hexamethylene diisocyanate, isophorone diisocyanate, 4,4,4 triisocyanato-triphenylmethane.

5. The polyurethane prepolymer according to anyone of the preceding claim, wherein the polyol is selected from: polyether polyol like polypropylene ether diol or triol, polyethylene ether diol or triol, polybutylene ether diol or triol, which are available as commercial products with different molecular weights, and polyester polyol, hydrogenated bisphenol A, dimeric acid based polyester polyols.

6. The polyurethane prepolymer according to anyone of the preceding claim, wherein the polyol is selected from: diols, and up to 25 % by weight of the polyol mixture is selected among polyols with 3 or more alcohol functions.

7. A method for the preparation of a polyurethane prepolymer according to anyone of the preceding claims, **characterized in that** it comprises the steps of reacting:
(i) at least one polyisocyanate;
with
(ii) at least one polyol of molecular weight comprised between 170 and 2140,
or
(ii bis) at least two polyols of molecular weight comprised between 62 and 6000, the average molecular weight of the polyol mixture being comprised between 170 and 2140,
the polyol(s) having an OH value comprised between 1400 and 12000mVal(OH)/kg;
wherein the quantity of polyisocyanate and polyol is selected so that:
- the NCO/OH ratio in the prepolymer is comprised between 1,1 and 1,4,
- the free NCO-content in the prepolymer is inferior or equal to 450mVal(NCO)/kg
- the urethane content in the prepolymer is superior or equal to 1250mVal(urethane)/kg.

8. A hot-melt sealant composition, **characterized in that** it comprises at least one polyurethane pre-polymer according to anyone of the preceding claims.

9. A hot melt sealant composition comprising a polyurethane prepolymer according to the invention and further comprising at least one component selected from: stabilizers thixotropic agents, fillers, pigments, resins, plasticizers.

10. A hot melt sealant according to claim 8 or claim 9, **characterized in that** it has a width of at least 2mm.

11. A method for sealing an automotive lamp, said method comprising the following steps:
- heating the sealant composition according to claim 8 or claim 9 to a temperature superior or equal to 75°C,
- applying the liquid sealant at the junction between the lamp chamber and the lamp screen.

12. An automotive lamp kit comprising a lamp screen and a sealant according to claim 8 or claim 9.
